# EUROPÄISCHE PATENTANMELDUNG

(11) **EP 3 454 290 A1**
(43) Veröffentlichungstag der Anmeldung: **13.03.2019**
(21) Anmeldenummer: 17190043.4
(22) Anmeldetag: 08.09.2017
(51) Int. Cl.: G06Q 50/26, H04L 29/06

(54) **DATENAUSTAUSCH ZWISCHEN VERSCHIEDENEN APPLIKATIONEN/CLIENTS**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung befasst sich mit dem Austausch von Daten zwischen verschiedenen Applikationen/Clients über ein Netzwerk. Gegenstand der Erfindung sind ein System und ein Verfahren zum Übertragen von Daten.

## Beschreibung

Die vorliegende Erfindung befasst sich mit dem Austausch von Daten zwischen verschiedenen Applikationen/Clients über ein Netzwerk. Gegenstand der Erfindung sind ein System und ein Verfahren zum Übertragen von Daten.

In vernetzten Systemen spielt der Austausch von Daten zwischen Applikationen/Clients eine wichtige Rolle. Sollen zwischen zwei Applikationen Daten ausgetauscht werden, so ist die Programmierung von Schnittstellen notwendig, damit die Sender-Applikation Daten an die Empfänger-Applikation versenden und die Empfänger-Applikation Daten von der Sender-Applikation empfangen kann.

Die Konfiguration der Schnittstelle umfasst üblicherweise ein Berechtigungskonzept und eine detaillierte Spezifikation über den auszutauschenden Datentyp.

Sollen Daten zwischen drei und mehr Applikationen ausgetauscht werden, potenziert sich der Programmieraufwand, denn für jede Applikation muss eine Schnittstelle vorhanden sein, über die sie mit einer der anderen Applikationen Daten austauschen kann.

Ändert sich der Datentyp, so muss jede Applikationsschnittstelle entsprechend angepasst werden. Gleiches gilt für Berechtigungsänderungen.

Gesucht wird daher nach einer Möglichkeit, beliebige Daten zwischen Applikationen, die vorzugsweise auf verschiedenen Clients laufen, auszutauschen. Die Lösung soll einfach skalierbar sein. Berechtigungsänderungen sollen einfach implementierbar sein.

Diese Aufgaben werden durch die Gegenstände der unabhängigen Ansprüche gelöst. Bevorzugte Ausführungsformen finden sich in den abhängigen Ansprüchen, der vorliegenden Beschreibung sowie in den Figuren.

Ein erster Gegenstand der vorliegenden Erfindung ist ein System zum Übertragen von Daten, umfassend
- mindestens einen Sender-Client,
- mindestens einen Empfänger-Client,
- eine Datenbank mit Berechtigungsinformationen und Informationen darüber, welche Daten-Typen auf dem mindestens einen Sender-Client gespeichert sind, sowie
- einen Server, der so konfiguriert ist, dass er
   bei einer Anfrage eines Empfänger-Clients zum Empfang von Daten eines definierten Typs anhand der Datenbank prüft,
      ob Daten des definierten Typs auf einem Sender-Client vorhanden sind, und
      ob der Empfänger-Client Daten des definierten Typs empfangen darf, und/oder
      ob ein Sender-Client, auf dem Daten des definierten Typs gespeichert sind, diese Daten versenden darf, und,
   für den Fall, dass die entsprechenden Berechtigungen vorliegen und/oder Daten vorhanden sind, Daten des definierten Typs von mindestens einem Sender-Client abruft und an den Empfänger-Client weiterleitet,
   und/oder
   bei einer Anfrage eines Sender-Clients zum Versand von Daten eines definierten Typs anhand der Datenbank prüft,
      ob der mindestens eine Empfänger-Client Daten des definierten Typs empfangen darf, und/oder
      ob der Sender-Client Daten des definierten Typs versenden darf, und
   bei Vorliegen entsprechender Berechtigungen Daten des definierten Typs von dem Sender-Client in Empfang nimmt und an mindestens einen Empfänger-Client weiterleitet.

Ein weiterer Gegenstand der vorliegenden Erfindung ist ein Verfahren zur Übertragung von Daten eines definierten Typs von mindestens einem Sender-Client über einen Server auf mindestens einen Empfänger-Client, dadurch gekennzeichnet, dass
- ein Empfänger-Client eine Anfrage zum Empfang von Daten des definierten Typs an den Server schickt, oder
- ein Sender-Client eine Anfrage zum Versand von Daten des definierten Typs an den Server schickt, und
- der Server anhand einer Datenbank prüft,
   ob Daten des definierten Typs auf einem Sender-Client vorhanden sind, und/oder
   ob ein Empfänger-Client Daten des definierten Typs empfangen darf, und/oder
   ob ein Sender-Client Daten des definierten Typs versenden darf, und,
   für den Fall, dass die entsprechenden Berechtigungen vorliegen und/oder Daten vorhanden sind, Daten des definierten Typs von mindestens einem Sender-Client abruft und an mindestens einen Empfänger-Client weiterleitet.

Kern der vorliegenden Erfindung ist eine Plattform zum Austausch von Daten, die wie eine Art Datendrehscheibe funktioniert. Die Plattform nimmt Anfragen zum Empfang und/ oder zum Versand von Daten entgegen, prüft, wo diese Daten sind und wer diese Daten empfangen darf. Sie nimmt die Daten entgegen und leitet sie an die berechtigten Empfänger weiter. Wenn keine Berechtigung vorliegt, werden die Daten nicht weitergeleitet; stattdessen kann beispielsweise eine Fehlermeldung erfolgen.

Für die Plattform ist es unerheblich, um was für Daten es sich handelt; es können beliebige Datentypen zwischen Applikationen ausgetauscht werden.

Die Applikationen, die an die Plattform angeschlossen werden sollen, benötigen lediglich eine Schnittstelle zur Kommunikation mit der Plattform, damit sie von der Plattform Daten empfangen und/oder an die Plattform senden können. Eine neue Applikation kann einfach an die Plattform "angehängt" werden, ohne dass es einer Änderung bei den bereits "angehängten" Applikationen bedarf. Es können also einfach und schnell neue Applikationen in den Datenaustausch aufgenommen werden.

Berechtigungen lassen sich einfach und schnell ändern und/oder aktualisieren und/oder erweitern, da sie in einer Datenbank abgelegt sind.

Das erfindungsgemäße System ist damit einfach skalierbar, flexibel, effizient und effektiv.

Die Erfindung wird nachstehend näher erläutert, ohne zwischen den Erfindungsgegenständen (Verfahren, System) zu unterscheiden. Die nachfolgenden Erläuterungen sollen vielmehr für alle Erfindungsgegenstände in analoger Weise gelten, unabhängig davon, in welchem Kontext (Verfahren, System) sie erfolgen.

Die vorliegende Erfindung erlaubt den Austausch von Daten zwischen Applikationen.

Unter dem Begriff "Applikation" wird ein Computerprogramm verstanden, das genutzt wird, um eine nützliche oder gewünschte nicht systemtechnische Funktionalität zu bearbeiten oder zu unterstützen. Die Applikation dient der Lösung von Benutzerproblemen; Beispiele sind: Bildbearbeitung, E-Mail-Programme, Webbrowser, Textverarbeitung, Tabellenkalkulation oder Computerspiele. Synonyme Begriffe sind zum Beispiel Anwendungssoftware, Anwendungsprogramm, Anwendung, Programm, englisch: *application software,* kurz App.

Eine Applikation kann sowohl lokal auf einem Desktop-Computer (Desktop-Anwendung) bzw. auf einem Mobilgerät installiert sein oder auf einem Server laufen, auf den vom Desktop-Computer bzw. Mobilgerät zugegriffen wird (Client-Server- bzw. Webanwendung). Sie kann, abhängig von der technischen Implementierung, im Modus Stapelverarbeitung oder im Dialogmodus (mit direkter Benutzer-Interaktion) ausgeführt werden.

Für die Ausführung der vorliegenden Erfindung sind mindestens zwei Applikationen erforderlich, die Daten austauschen. Vorzugsweise ist eine Vielzahl an verschiedenen Applikationen vorhanden, die Daten untereinander austauschen.

Der Begriff "Austausch" soll hier neben einer gegenseitigen Datenübertragung auch eine einseitige Datenübertragung umfassen, also die Übertragung von Daten von einer Applikation zu einer anderen Applikation.

Diejenige Applikation, von der Daten an eine andere Applikation übertragen werden (sollen), wird hier auch als Sender-Applikation bezeichnet; diejenige Applikation, an die Daten übertragen werden (sollen), wird hier auch als Empfänger-Applikation bezeichnet. Dabei sind die Bezeichnungen nicht als einschränkend zu verstehen, sondern dienen lediglich einer funktionellen Beschreibung der Schritte, die eine Applikation ausführt (ausführen soll). Das bedeutet, dass eine Applikation, die hier als Sender-Applikation bezeichnet wird, nicht so konfiguriert ist, dass sie nur Daten versendet kann, sondern, dass sie auch so konfiguriert sein kann, dass sie sowohl Daten versenden als auch empfangen kann. Eine Applikation im Sinne der Erfindung kann also sowohl als Sender-Applikation als auch als Empfänger-Applikation ausgestaltet sein; sie wird in der Regel aber nur eine dieser Funktionen zu einem definierten Zeitpunkt ausführen (versenden oder empfangen) und nicht beide Funktionen gleichzeitig, so dass sie dann gemäß ihrer Funktion zu dem definierten Zeitpunkt als Sender-Applikation bzw. Empfänger-Applikation bezeichnet wird.

Analoges gilt für die Bezeichnungen "Sender-Client" und "Empfänger-Client".

Ein "Client" ist ein Computersystem, das mit dem Server über ein Netzwerk verbunden ist und mit dem Server Daten austauscht. Das Computersystem kann zum Beispiel ein Arbeitsplatzrechner oder Arbeitsplatzcomputer (Personalcomputer kurz: PC) sein, der am Arbeitsplatz eines Menschen steht und zur Bildschirmarbeit genutzt wird. Es kann sich auch um ein mobiles Gerät wie einen Tabletcomputer, ein Smartphone, einen Laptop, eine Smartwatch oder dergleichen handeln.

Als "Sender-Client" wird hier ein Computersystem bezeichnet, auf dem eine Applikation läuft, die Daten versendet oder Daten versenden soll. Als "Empfänger-Client" wird ein Computersystem bezeichnet, auf dem eine Applikation läuft, die Daten empfängt oder Daten empfangen soll. Es ist denkbar, dass auf einem Client sowohl eine Sender-Applikation als auch eine Empfänger-Applikation läuft. In einem solchen Fall fungiert der Client sowohl als Sender-Client als auch als Empfänger-Client.

Es versteht sich von selbst, dass entsprechende Applikationen auf dem Sender-Client und/oder dem Empfänger-Client und auf dem Server eine Datenübertragung initiieren, prüfen und/oder durchführen. Zur Vereinfachung wird hier jedoch der Datenaustausch oftmals auf Basis der Clients und des Servers und nicht auf Basis der auf diesen Systemen laufenden Applikationen beschrieben. Wenn es zum Beispiel heißt, dass ein Empfänger-Client eine Anfrage zum Empfang von Daten eines definierten Typs an den Server schickt, oder ein Sender-Client eine Anfrage zum Versand von Daten eines definierten Typs an den Server schickt, soll darunter verstanden werden, dass eine Empfänger-Applikation, die auf einem Client läuft, der als Empfänger-Client bezeichnet wird, eine Anfrage zum Empfang von Daten eines definierten Typs an eine Applikation schickt, die auf dem Server läuft, bzw. dass eine Sender-Applikation, die auf einem Client läuft, der als Sender-Client bezeichnet wird, eine Anfrage zum Versand von Daten eines definierten Typs an eine Applikation schickt, die auf dem Server läuft.

Die mindestens zwei Applikationen, die Daten austauschen, können auf demselben Computersystem laufen; vorzugsweise laufen sie auf verschiedenen Computersystemen.

Das erfindungsgemäße System umfasst ferner einen Server, der die Funktion einer Datendrehscheibe übernimmt.

Unter dem Begriff "Server" wird hier ein Computerprogramm und/oder ein Computersystem verstanden, das Computerfunktionalitäten wie Dienstprogramme, Daten oder andere Ressourcen bereitstellt, damit andere Computersysteme und/oder Programme (Clients und/oder Applikationen) darauf zugreifen können.

Vorzugsweise wird ein Webserver verwendet. Beispielsweise kann eine Microservice Architektur auf Basis von node.js verwendet werden.

Vorzugsweise sind die Computersysteme (Clients) und der Server über ein Netzwerk miteinander verbunden.

Ein Netzwerk (Rechnernetz) ist ein Zusammenschluss verschiedener technischer, primär selbstständiger elektronischer Systeme (insbesondere Computersysteme, aber auch Sensoren, Aktoren, Agenten und sonstige funktechnische Komponenten usw.), der die Kommunikation der einzelnen Systeme untereinander ermöglicht.

Der erfindungsgemäße Datenaustausch erfolgt nicht direkt zwischen den Applikationen (Clients) sondern über den Server. Als Schnittstelle zum Server kann beispielsweise ein Hypertext-Übertragungsprotokoll (engl. Hypertext Transfer Protocol, HTTP) oder auch ein beliebiges anderes zustandsloses Protokoll verwendet werden. Das Hypertext-Übertragungsprotokoll ist ein zustandsloses Protokoll zur Übertragung von Daten auf der Anwendungsschicht über ein Rechnernetz. Es wird hauptsächlich eingesetzt, um Webseiten (Hypertext-Dokumente) aus dem World Wide Web (WWW) in einen Webbrowser zu laden. Es ist jedoch nicht prinzipiell darauf beschränkt und auch als allgemeines Dateiübertragungsprotokoll sehr verbreitet.

Ein weiterer Bestandteil des erfindungsgemäßen Systems ist eine Datenbank. In dieser Datenbank sind die Berechtigungen gespeichert, welche Komponenten untereinander Daten welchen Typs austauschen dürfen (Berechtigungsinformationen).

Diese Berechtigungen können auf Basis der verwendeten Computersysteme (welches Computersystem darf mit welchem anderen Computersystem Daten austauschen) und/oder auf Basis der Applikationen (welche Applikation darf mit welcher anderen Applikation Daten austauschen) und/oder auf Basis der definierter Daten-Typen (welches Computersystem und/oder welche Applikation darf Daten des definierten Typs empfangen und/oder versenden) vergeben sein.

In einer bevorzugten Ausführungsform sind die Berechtigungen ausschließlich auf Basis definierter Daten-Typen vergeben. In einer besonders bevorzugten Ausführungsform sind ausschließlich Berechtigungen gespeichert, die angeben, welcher Empfänger-Client Daten welchen Typs empfangen darf. In einer anderen besonders bevorzugten Ausführungsform sind ausschließlich Berechtigungen gespeichert, die angeben, welcher Sender-Client Daten welchen Typs versenden darf.

Ferner sind in der Datenbank Informationen darüber gespeichert, welche Daten-Typen auf Computersystemen (Clients), die über das Netzwerk an den Server angeschlossen sind, vorhanden sind.

Dabei meint der Begriff "vorhanden", dass Daten des eines definierten Typs auf einem Client gespeichert sind und/oder von dem Client zur Verfügung gestellt werden können (es ist zum Beispiel denkbar, dass die Daten erst auf Anfrage erzeugt oder beschafft werden).

Der Begriff "Typ" ist breit zu verstehen. Unter "Typ" kann sowohl der Inhalt als auch das Format als auch ein anderes Merkmal verstanden werden, das die Daten und/oder Personen und/oder Computersysteme und/oder andere Dinge, die mit den Daten in Beziehung stehen, kennzeichnet (z.B. Name, Erstelldatum, Änderungsdatum, Ersteller, ...).

Bei der Datenbank, die hier auch als Berechtigungsdatenbank bezeichnet wird, ist vorzugsweise eine spaltenorientierte Datenbank; als Beispiel sei Apache Cassandra genannt.

Die Berechtigungsdatenbank kann auf dem Server installiert sein. Es ist aber auch denkbar, dass die Berechtigungsdatenbank auf einem separaten Computersystem installiert ist, auf das der Server über das Netzwerk zugreifen kann.

Die Datenübertragung von einer Applikation zu einer anderen kann sowohl von der Empfänger- als auch von der Senderseite initiiert werden. Das bedeutet, dass sowohl die Empfängerseite Daten anfragen (Pull-Mechanismus) als auch die Senderseite den Versand von Daten anfragen kann (Push-Mechanismus).

Zunächst soll der Pull-Mechanismus näher beschrieben werden.

Der Empfänger-Client ist an Daten eines definierten Typs interessiert.

Der Empfänger-Client richtet eine Anfrage an den Server. Erfindungsgemäß ist die Spezifikation des Daten-Typs in der Anfrage ausreichend, um eine Datenübertragung zu initiieren. Der Empfänger-Client muss nicht wissen, wo sich Daten des entsprechenden Typs befinden. In einer bevorzugten Ausführungsform der vorliegenden Erfindung beinhaltet die Anfrage daher lediglich eine Spezifikation des Typs und keine Spezifikation in Bezug auf den Sender-Client.

Daten des angefragten Typs können auf einem oder mehreren Sender-Clients vorhanden sein.

Die Informationen, auf welchem Sender-Client / auf welchen Sender-Clients Daten des angefragten Typs vorhanden sind, sind in der Berechtigungsdatenbank gespeichert. Zudem ist in der Berechtigungsdatenbank gespeichert, welche Empfänger-Clients (und/oder Empfänger-Applikationen) Daten des angefragten Typs empfangen dürfen. Denkbar ist auch, dass in der Berechtigungsdatenbank gespeichert ist, welche Sender-Clients (und/oder Sender-Applikationen) Daten des angefragten Typs versenden dürfen.

Der Server nimmt die Anfrage vom Empfänger-Client entgegen und prüft anhand der Berechtigungsinformationen in der Berechtigungsdatenbank, ob der Empfänger-Client Daten des angefragten Typs empfangen darf. Liegt eine entsprechende Berechtigung nicht vor, so weist der Server die Anfrage ab. Dies kann zum Beispiel durch eine Mitteilung an den Empfänger-Client erfolgen, in der dem Empfänger-Client mitgeteilt wird, dass er nicht über die nötige Berechtigung verfügt. Auch eine Fehlermeldung ist denkbar.

Liegt eine entsprechende Berechtigung vor, prüft der Server anhand der Berechtigungsdatenbank, auf welchen Sender-Clients Daten des angefragten Typs vorhanden sind.

Denkbar ist auch, dass der Server zunächst prüft, ob Daten des angefragten Typs auf einem oder mehreren Sender-Clients vorhanden sind und dann prüft, ob der Empfänger-Client berechtigt ist, Daten des angefragten Typs zu empfangen.

Sind die angefragten Daten auf keinem der angeschlossenen Sender-Clients vorhanden, so kann der Server eine entsprechende Mitteilung an den Empfänger-Client übermitteln, dass die angefragten Daten nicht vorhanden sind. Auch eine Fehlermeldung ist denkbar.

Sind die angefragten Daten vorhanden und verfügt der Empfänger-Client über die erforderliche Berechtigung zum Empfang der Daten, kann der Server die angefragten Daten von dem Sender-Client abrufen und an den Empfänger-Client weiterleiten. Ggf. ist für diese Aktion auch eine Berechtigung seitens des Sender-Clients zum Versand der Daten erforderlich (je nach Ausgestaltung der Erfindung).

In einer Ausführungsform sammelt der Server alle vorhandenen Daten des angefragten Typs von den entsprechenden Sender-Clients ein und leitet diese an den Empfänger-Client weiter.

Denkbar ist auch, dass die Anfrage konkrete Informationen über den Sender-Client / über die Server-Clients, von dem /denen Daten abgerufen werden sollen, beinhaltet. In einem solchen Fall ist der angefragte Daten-Typ zumindest auch über den angefragten Sender-Client / die angefragten Sender-Clients spezifiziert. In einem solchen Fall sammelt der Server die Daten von dem entsprechenden Server-Client / von den entsprechenden Server-Clients ein und leitet sie an den Empfänger-Client weiter. Vorzugsweise beinhaltet die Anfrage jedoch keine Informationen über einen Sender-Client.

Als nächstes soll der Push-Mechanismus näher betrachtet werden.

Ein Sender-Client möchte Daten eines definierten Typs an einen oder mehrere Empfänger-Clients senden. Der Sender-Client richtet eine Anfrage an den Server. Erfindungsgemäß muss in der Anfrage lediglich der Typ der zu versendenden Daten spezifiziert sein; es ist nicht erforderlich, den oder die Empfänger-Clients in der Anfrage zu spezifizieren. Es ist jedoch möglich, dass die Anfrage auch Informationen über den zu adressierenden Empfänger-Client / den zu adressierenden Empfänger-Clienten umfasst.

Der Server nimmt die Anfrage vom Sender-Client entgegen und prüft anhand der Berechtigungsdatenbank, welcher Empfänger-Client / welche Empfänger-Clients die Daten des spezifizierten Typs entgegennehmen darf / dürfen. Beinhaltet die Anfrage des Sender-Clients an den Empfänger-Client Informationen über den zu adressierenden Empfänger-Client / die zu adressierenden Empfänger-Clients, prüft der Server, ob der entsprechende Empfänger-Client / die entsprechenden Empfänger-Clients Daten des spezifizierten Typs empfangen darf / dürfen.

Liegen die erforderlichen Berechtigungen in der Berechtigungsdatenbank nicht vor, so weist der Server die Anfrage vom Sender-Client zurück. Dies kann zum Beispiel durch eine Mitteilung an den Sender-Client erfolgen, in der dem Sender-Client mitgeteilt wird, dass er und/oder der Sender-Client nicht über die nötige Berechtigung verfügt. Auch eine Fehlermeldung ist denkbar.

Liegen die erforderlichen Berechtigungen in der Berechtigungsdatenbank vor, nimmt der Server die Daten des spezifizierten Typs vom Sender-Client entgegen und leitet sie an die berechtigten und ggf. spezifizierten Empfänger-Clients weiter.

Der Push-Mechanismus kann auch so ausgestaltet sein, dass die an den Server gerichtete Anfrage nicht unabhängig von sondern zusammen mit den zu versendenden Daten an den Server geschickt wird.

Das beschriebene Pull-System und das beschriebene Push-System können einfach durch Anschließen weiterer Empfänger-Clients und/oder Sender-Clients erweitert werden. Jeder neu hinzukommende Empfänger-Client und/oder Sender-Client muss lediglich in Hinblick auf einen Datenaustausch mit dem Server konfiguriert werden und es müssen Berechtigungsinformationen und ggf. Informationen über vorhandene Typen von Daten in die Berechtigungsdatenbank aufgenommen werden. Dann kann jeder neu hinzugekommene Empfänger-Client und/oder Sender-Client Daten mit den bereits vorhandenen Clients austauschen, ohne dass Änderungen an den vorhandenen Clients vorgenommen werden müssten. Das System ist einfach skalierbar.

Nachfolgend wird eine bevorzugte Ausführungsform der Erfindung zur Änderung / Aktualisierung von Berechtigungen beschrieben.

Es ist denkbar, dass ein Empfänger-Client Daten eines definierten Typs empfangen möchte und eine entsprechende Anfrage an den Server richtet. Es ist denkbar, dass der Server anhand der Berechtigungsdatenbank feststellt, dass die angefragten Daten auf einem Sender-Client vorhanden sind, der Empfänger-Client jedoch nicht über die erforderliche Berechtigung verfügt, Daten des angefragten Typs vom Server-Client zu empfangen. Es ist denkbar, dass der Server dem Empfänger-Client eine entsprechende Mitteilung übermittelt, dass die angefragten Daten auf einem Sender-Client vorhanden sind, der Empfänger-Client jedoch nicht über die erforderliche Berechtigung verfügt, Daten des angefragten Typs vom Server-Client zu empfangen. Daraufhin kann der Empfänger-Client über den Server eine Berechtigungsanfrage an den Sender-Client, auf dem die angefragten Daten vorhanden sind, senden. Denkbar ist auch, dass die Berechtigungsanfrage an jemanden geschickt wird, der die Berechtigungen für den Sender-Client verwaltet. Der Begriff "Berechtigungsanfrage" bedeutet hier, dass der Empfänger-Client um die Berechtigung bittet, Daten eines definierten Typs (vom Sender-Client über den Server) zu empfangen. Der Sender-Client bzw. der Verwalter prüft die Berechtigungsanfrage und kann dem Empfänger-Client einen Zugriff auf die angefragten Daten in einfacher Weise dadurch ermöglichen, dass er entsprechende Berechtigungen in die Berechtigungsdatenbank einträgt oder eintragen lässt. Die Kommunikation erfolgt vorzugsweise ausschließlich über den Server, d.h. Empfänger-Client und Sender-Client müssen nicht in direkten Kontakt miteinander treten; "sie müssen sich keine Gedanken darüber machen", wie sie einander (direkt) kontaktieren können; sie müssen sich nicht einmal "kennen".

Ebenso ist es denkbar, dass ein Sender-Client Daten eines definierten Typs an einen spezifizierten Empfänger-Client versenden möchte. Es ist denkbar, dass der Server anhand der Berechtigungsdatenbank feststellt, dass der spezifizierte Empfänger-Client nicht über die erforderliche Berechtigung verfügt, Daten vom Server-Client zu empfangen und/oder dass der Sender-Client nicht über die erforderliche Berechtigung verfügt, Daten des definierten Typs an den Empfänger-Client zu senden. Es ist denkbar, dass der Server dem Sender-Client und/oder dem Empfänger-Client eine entsprechende Mitteilung übermittelt, dass der Empfänger-Client und/oder der Sender-Client nicht über die erforderliche Berechtigung für die angefragte Datenübertragung verfügt. Daraufhin kann der Sender-Client und/oder der Empfänger-Client über den Server eine entsprechende Berechtigungsanfrage an einen Verwalter der entsprechenden Berechtigungen senden. Der Verwalter prüft die Anfrage und kann dem Empfänger-Client einen Zugriff auf die Daten des definierten Typs und/oder dem Sender-Client den Versand der Daten des definierten Typs dadurch ermöglichen, dass der Verwalter entsprechende Berechtigungen in die Berechtigungsdatenbank einträgt oder eintragen lässt.

Die Erfindung wird nachstehend anhand von Figuren näher erläutert, ohne die Erfindung auf die in den Figuren gezeigten Merkmale zu beschränken.

Es zeigen:

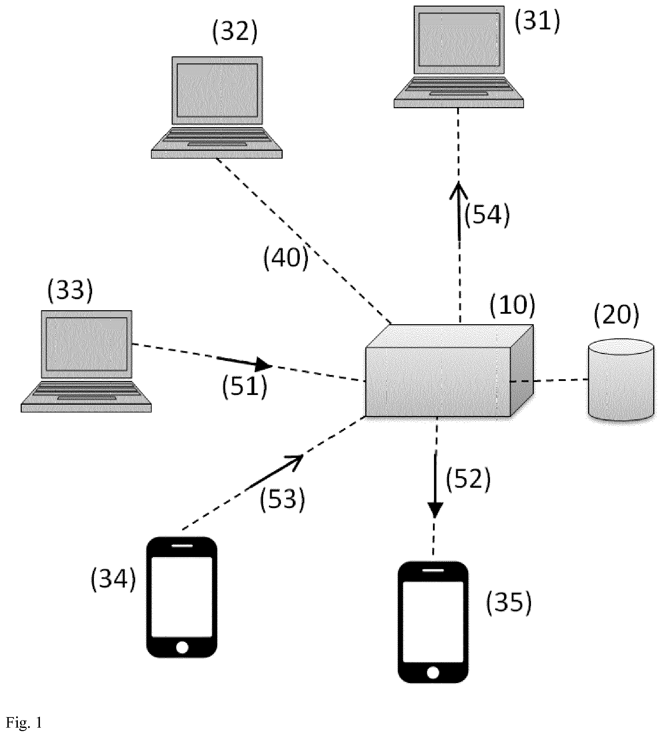

Fig. 1. zeigt schematisch eine bevorzugte Ausführungsform des erfindungsgemäßen Systems.

Das System umfasst einen Server (10), der mit einer Berechtigungsdatenbank (20) verbunden ist. Es sind ferner eine Vielzahl an Clients (31, 32, 33, 34, 35) vorhanden, die mit dem Server über ein Netzwerk (dargestellt durch die gestrichelten Linien wie z.B. (40)) verbunden sind. Auf den Clients sind Applikationen installiert, die Daten untereinander austauschen (können). Auf dem als Sender-Client agierenden Desktop-Client (33) überträgt die als Sender-Applikation agierende Applikation Daten (51) auf den Server (10), die vom Server (10) an die als Empfänger-Applikation agierende Applikation auf dem mobilen Client (35) weitergeleitet werden. Auf dem als Sender-Client agierenden mobilen Client (34) überträgt die als Sender-Applikation agierende Applikation Daten (53) auf den Server (10), die vom Server (10) an die als Empfänger-Applikation agierende Applikation auf dem Desktop-Client (31) weitergeleitet werden.

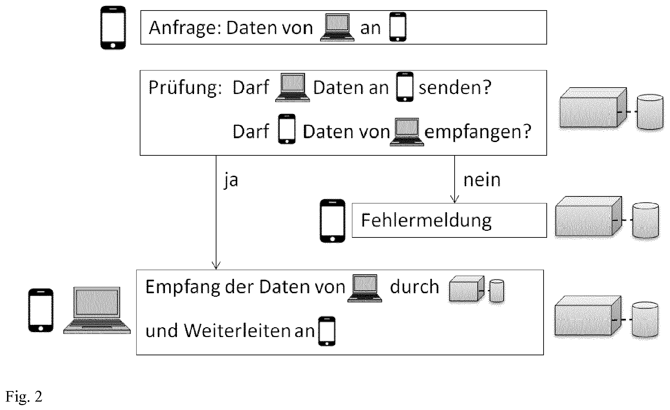

Fig. 2 zeigt schematisch ein Beispiel für den Ablauf einer bevorzugten Ausführungsform des erfindungsgemäßen Verfahrens.

In einem ersten Schritt sendet eine Applikation auf einem Smartphone eine Anfrage an den Server, um Daten eines definierten Typs zu empfangen, die auf einem Desktop-Computer vorhanden sind.

In einem zweiten Schritt überprüft der Server anhand der Berechtigungen in der Berechtigungsdatenbank, ob der Desktop-Computer die angefragten Daten an das Smartphone übertragen darf und/oder ob das Smartphone Daten von dem Desktop-Computer empfangen darf.

Falls die erforderlichen Berechtigungen nicht vorliegen ("nein"), sendet der Server eine Fehlermeldung an das Smartphone und die Anfrage wird abgelehnt; es werden keine Daten übertragen.

Falls die Berechtigungen vorliegen ("ja"), übernimmt der Server die Daten von dem Desktop-Computer und leitet sie an das Smartphone weiter.

Die Kommunikation erfolgt ausschließlich über den Server; Smartphone und Desktop-Computer tauschen untereinander keine Informationen aus.

## Patentansprüche

1. System zum Übertragen von Daten, umfassend
- mindestens einen Sender-Client,
- mindestens einen Empfänger-Client,
- eine Datenbank mit Berechtigungsinformationen und Informationen darüber, welche Daten-Typen auf dem mindestens einen Sender-Client gespeichert sind, sowie
- einen Server, der so konfiguriert ist, dass er
bei einer Anfrage eines Empfänger-Clients zum Empfang von Daten eines definierten Typs anhand der Datenbank prüft,
ob Daten des definierten Typs auf einem Sender-Client vorhanden sind, und
ob der Empfänger-Client Daten des definierten Typs empfangen darf, und/oder
ob ein Sender-Client, auf dem Daten des definierten Typs gespeichert sind, diese Daten versenden darf, und,
für den Fall, dass die entsprechenden Berechtigungen vorliegen und/oder Daten vorhanden sind, Daten des definierten Typs von mindestens einem Sender-Client abruft und an den Empfänger-Client weiterleitet,
und/oder
bei einer Anfrage eines Sender-Clients zum Versand von Daten eines definierten Typs anhand der Datenbank prüft,
ob der mindestens eine Empfänger-Client Daten des definierten Typs empfangen darf, und/oder
ob der Sender-Client Daten des definierten Typs versenden darf, und
bei Vorliegen entsprechender Berechtigungen Daten des definierten Typs von dem Sender-Client in Empfang nimmt und an mindestens einen Empfänger-Client weiterleitet.

2. System gemäß Anspruch 1, umfassend
- mindestens einen Sender-Client, auf dem Daten eines definierten Typs vorhanden sind,
- einen Empfänger-Client,
- eine Datenbank, in der Berechtigungsinformationen gespeichert sind, die angeben, dass auf dem mindestens einen Sender-Client Daten des definierten Typs vorhanden sind, und die angeben, ob der Empfänger-Client Daten des definierten Typs empfangen darf,
- einen Server, der so konfiguriert ist, dass er
bei einer Anfrage seitens des Empfänger-Clients zum Empfang von Daten des definierten Typs anhand der Datenbank prüft, ob der Empfänger-Client Daten des definierten Typs empfangen darf, und, für den Fall, dass der Empfänger-Client Daten des definierten Typs empfangen darf, Daten des definierten Typs von dem mindestens einen Sender-Client abruft und an den Empfänger-Client weiterleitet, und für den Fall, dass der Empfänger-Client Daten des definierten Typs nicht empfangen darf, eine Mitteilung an den Empfänger-Client sendet, dass der Empfänger-Client nicht die erforderliche Berechtigung besitzt, um Daten des definierten Typs zu empfangen.

3. System gemäß Anspruch 1, umfassend
- einen Sender-Client, auf dem Daten eines definierten Typs vorhanden sind,
- mindestens einen Empfänger-Client,
- eine Datenbank, in der Berechtigungsinformationen gespeichert sind, die angeben, ob der mindestens eine Empfänger-Client Daten des definierten Typs empfangen darf,
- einen Server, der so konfiguriert ist, dass er
bei einer Anfrage des mindestens einen Sender-Clients zum Versand von Daten des definierten Typs anhand der Datenbank prüft, welcher Empfänger-Client Daten des definierten Typs empfangen darf und Daten des definierten Typs von dem mindestens einen Sender-Client in Empfang nimmt und an diejenigen Empfänger-Clients weiterleitet, die Daten des definierten Typs empfangen dürfen.

4. System gemäß Anspruch 1 oder 3, umfassend
- einen Sender-Client, auf dem Daten eines definierten Typs vorhanden sind,
- mindestens einen Empfänger-Client,
- eine Datenbank, in der Berechtigungsinformationen gespeichert sind, die angeben, ob der mindestens eine Sender-Client Daten des definierten Typs versenden darf,
- einen Server, der so konfiguriert ist, dass er
bei einer Anfrage des mindestens einen Sender-Clients zum Versand von Daten des definierten Typs anhand der Datenbank prüft, ob der Sender-Client Daten des definierten Typs versenden darf und, für den Fall, dass eine Berechtigung zum Versenden der Daten des definierten Typs vorliegt, die Daten von dem Sender-Client in Empfang nimmt und an den mindestens einen Empfänger-Client weiterleitet.

5. System gemäß einem der Ansprüche 1 bis 4, **dadurch gekennzeichnet, dass** zur Kommunikation zwischen Sender-Client und Server und/oder Empfänger-Client und Server ein zustandsloses Übertragungsprotokoll implementiert ist.

6. Verfahren zur Übertragung von Daten eines definierten Typs von mindestens einem Sender-Client über einen Server auf mindestens einen Empfänger-Client, **dadurch gekennzeichnet, dass**
- ein Empfänger-Client eine Anfrage zum Empfang von Daten des definierten Typs an den Server schickt, oder
- ein Sender-Client eine Anfrage zum Versand von Daten des definierten Typs an den Server schickt, und
- der Server anhand einer Datenbank prüft,
ob Daten des definierten Typs auf einem Sender-Client vorhanden sind, und/oder
ob ein Empfänger-Client Daten des definierten Typs empfangen darf, und/oder
ob ein Sender-Client Daten des definierten Typs versenden darf, und,
für den Fall, dass die entsprechenden Berechtigungen vorliegen und/oder Daten vorhanden sind, Daten des definierten Typs von mindestens einem Sender-Client abruft und an mindestens einen Empfänger-Client weiterleitet.

7. Verfahren gemäß Anspruch 6, **dadurch gekennzeichnet, dass**
- ein Empfänger-Client eine Anfrage zum Empfang von Daten eines definierten Typs an den Server schickt,
und
- der Server anhand der Datenbank prüft, ob der Empfänger-Client Daten des definierten Typs empfangen darf, und für den Fall, dass der Empfänger-Client Daten des definierten Typs empfangen darf, Daten des definierten Typs von dem mindestens einen Sender-Client abruft und an den Empfänger-Client weiterleitet, und, für den Fall, dass der Empfänger-Client Daten des definierten Typs nicht empfangen darf, eine Mitteilung an den Empfänger-Client übermittelt, dass der Empfänger-Client nicht über die erforderliche Berechtigung zum Empfang von Daten des definierten Typs verfügt.

8. Verfahren gemäß Anspruch 7, **dadurch gekennzeichnet, dass** der Server alle Daten des definierten Typs von den Sender-Clients, auf dem die Daten vorhanden sind, abruft und an den Empfänger-Client weiterleitet.

9. Verfahren gemäß einem der Ansprüche 6 bis 8, **dadurch gekennzeichnet, dass** die Anfrage des Empfänger-Clients keine Informationen über den Sender-Client umfasst.

10. Verfahren gemäß Anspruch 6, **dadurch gekennzeichnet, dass**
- ein Sender-Client eine Anfrage zum Versand von Daten eines definierten Typs an den Server schickt, und
- der Server anhand der Datenbank prüft, ob ein Empfänger-Client Daten des definierten Typs empfangen darf, und für den Fall, dass ein Empfänger-Client Daten des definierten Typs empfangen darf, Daten des definierten Typs von dem Sender-Client abruft und an den Empfänger-Client weiterleitet, und, für den Fall, dass kein Empfänger-Client Daten des definierten Typs empfangen darf, eine Mitteilung an den Sender-Client übermittelt, dass kein Empfänger-Client über die erforderliche Berechtigung zum Empfang von Daten des definierten Typs verfügt.

11. Verfahren gemäß einem der Ansprüche 6 oder 10, **dadurch gekennzeichnet, dass** die Anfrage des Sender-Clients keine Informationen über den Empfänger-Client umfasst.

12. Verfahren gemäß einem der Ansprüche 6 bis 11, **gekennzeichnet durch** die folgenden Schritte:
- der Empfänger-Client richtet eine Berechtigungsanfrage an den Server, um eine Berechtigung zum Empfang von Daten eines definierten Typs zu erhalten
- der Server ermittelt denjenigen Verwalter, der die Berechtigung erteilen kann und leitet die Berechtigungsanfrage an den Verwalter weiter
- der Verwalter erteilt dem Empfänger-Client die Berechtigung, indem er die Berechtigung in die Datenbank einträgt oder eintragen lässt.

13. Verfahren gemäß einem der Ansprüche 6 bis 12, **gekennzeichnet durch** die folgenden Schritte:
- der Sender-Client richtet eine Berechtigungsanfrage an den Server, um eine Berechtigung zum Versenden von Daten eines definierten Typs zu erhalten
- der Server ermittelt denjenigen Verwalter, der die Berechtigung erteilen kann und leitet die Berechtigungsanfrage an den Verwalter weiter
- der Verwalter erteilt dem Sender-Client die Berechtigung, indem er die Berechtigung in die Datenbank einträgt oder eintragen lässt.
